# EUROPEAN PATENT SPECIFICATION

(11) **EP 1 667 562 B1**
(45) Date of publication and mention of the grant of the patent: **19.11.2008**
(21) Application number: 04743544.1
(22) Date of filing: 26.07.2004
(51) Int. Cl.: A47K 3/40

(54) **COMPOSITE ARTICLE AND METHOD OF MANUFACTURE**
ZUSAMMENGESETZTER GEGENSTAND UND VERFAHREN SEINER HERSTELLUNG
ARTICLE COMPOSITE ET SON PROCEDE DE FABRICATION

(30) Priority: 25.07.2003 GB 0317438
(43) Date of publication of application: 14.06.2006
(73) Proprietor: Kohler Mira Ltd, Cheltenham Gloucestershire GL52 5EP (GB)
(72) Inventor: LEWIS, William David, Aquarius, Cheltenham, Gloucestershire GL52 8JJ (GB); GOSTLING, Paul Andrew, Brockworth, Gloucester GL3 4DS (GB); BATTYE, Ian,Richard, Hollym, East Yorkshire HU19 2QQ (GB); MAGEE, John, Sutton ParkAnnes FY8 3LU, Hull HU7 6DD (GB); GARRIGAN, Robert Stanley, Hull HU8 9LX (GB)
(74) Representative: Wightman, David Alexander
(86) International application number: PCT/GB2004/003214
(87) International publication number: WO 2005/011455

(56) References cited:
- EP-A- 0 563 670
- EP-A- 1 293 155
- DE-A- 1 404 394
- DE-A- 4 338 963
- DE-A- 19 746 944
- DE-C- 10 045 792
- DE-U- 8 610 935
- US-A1- 2002 041 954
- DATABASE WPI Section Ch, Week 199415 Derwent Publications Ltd., London, GB; Class A18, AN 1994-124175 XP002300207 -& JP 06 073243 A (TONEN SEKIYU KAGAKU KK) 15 March 1994 (1994-03-15)
- DATABASE WPI Section Ch, Week 199705 Derwent Publications Ltd., London, GB; Class A25, AN 1997-047041 XP002300208 -& JP 08 300375 A (KANTO JIDOSHA KOGYO KK) 19 November 1996 (1996-11-19)

## Description

This invention relates to composite articles comprising shower trays and methods of manufacturing such articles.

Shower trays comprising an acrylic capped ABS (acrylonitrile butadiene styrene) upper layer adhered to and supported by a resin-stone base are known. Such trays are usually manufactured by pouring a resin-stone filler into a mould containing a shell of acrylic capped ABS pre-formed to the desired shape of the top and sides of the shower tray and hardening the filler to form the base. In this way the acrylic capped ABS shell forms the outer surface of the exposed parts of the tray in its installed position and the filler supports the shell and forms the underside of the tray that contacts the surface on which the tray is installed

Air/gasses can become trapped in the resin-stone filler during hardening to form the base resulting in a rough finish to the underside of the tray that can put off buyers as well as have a negative impact on the customer's impression of the quality of the tray. In some cases the base will have to be ground flat so the tray sits properly when installed. This is undesirable due to the potential health hazard from airborne particles released when grinding the base and precautions to reduce the risk add to manufacturing costs.

The rough surface of the base also makes it difficult to form a fluid tight seal between the tray and a waste pipe during installation. In some cases the installer may attempt to overcome this problem by silicon sealing the waste pipe to the tray. This prevents easy removal of the waste pipe which may be required if the waste pipes become misaligned. For example, waste pipes in new buildings may become misaligned due to settling of the building.

For installation on suspended timber floors, the waste pipe for the shower can be installed below the floor with the shower tray secured directly to the timber floor by a sand/cement mix or a silicone sealant. For installation on solid floors the shower tray has to be raised off the floor on legs to allow space beneath the shower tray for the waste pipe. Currently, manufacturers provide two shower trays, one for installation on suspended timber floors and another for installation on solid floors having inserts into which legs can be screwed for raised installation. The provision of different shower trays for installation on suspended or solid floors is undesirable for a variety of reasons. For example, additional components and processing stages are required to provide shower trays with inserts and retailers have to stock both types. This adds to costs for both manufacturers and retailers. Also customers/installers may purchase the wrong type of tray.

There are two main methods of providing inserts on the shower tray. One method is to glue MDF backboard having pre-assembled inserts to the base of the tray. Gluing of the backboard to the base is not a reliable or clean process increasing the complexity of manufacture and also undesirably increases the weight of the tray.

The second method is to place the inserts into the composite filler during moulding of the base. The problem with this method is that it is difficult to maintain the inserts vertical during curing of the base and release of the tray from the moulding tool, which can impact on the stability of the tray when installed.

A further problem of the known acrylic capped ABS shower trays is that the weight of the trays can make lifting and carrying the trays during installation difficult. Lifting and carrying heavy trays can result in injury to the lifter or/and cause the lifter to drop the tray resulting in damage to the tray. Typically, 800mm x 800mm trays currently available in the market place weigh in the region of 26kg to 33kg.

This problem can be increased by the presence of release agent used to assist removal of the shower tray from the mould during manufacture. The release agent is extremely difficult to remove making handling of the tray awkward and messy with increased frisk of the tray slipping out of the lifter's hands. Also the release agent can attract swarf or debris which can present the additional risk of the lifter cutting their hands.

A shower tray is known from DE 100 45 792-C1 in which an acrylic shell is glued to a tray carrier of foamed material such as polystyrene by a reaction adhesive such as polyurethane adhesive.

A bathtub is known from DE 43 38 963-A1 having outer and inner shells with a filling material in an intermediate cavity between the shells. The filling material may be a polymerising material, a foamed material or an elastic material.

A method for forming shower-trays, bathtubs, wash-basins and floor toilets is known from EP-A-0563670 in which polyurethane foam is injected between two thermoformed plastics shells that are structurally different from each other in a mould which, on being completely closed defines the required thickness. This document discloses an anticle comprising the features of the preamble of claim 1.

It is an object of the invention to overcome or at least mitigate some of the aforementioned disadvantages of known shower trays.

According to a first aspect of the invention there is provided a composite article as defined in claim 1. of.

The invention will be described hereinafter with reference to shower trays for ablutionary shower units but it will be understood the invention is not limited to shower trays and has application to other articles of sanitary ware such as sinks or baths.

By this invention, the filler is contained within the plastics shell eliminating the need for a release agent and providing a smooth, flat surface on the underside aiding installation of the shower tray. Furthermore, the plastics shell may provide a more appealing finish to consumers.

The upper member may be made of materials that provide a hardwearing, scratch resistant outer surface to the tray with softer material underneath for absorbing impacts occurring during use of the tray. The upper member may be an acrylic capped ABS material. The acrylic material forms the hardwearing, scratch resistant outer surface of the tray with the softer underlying ABS material absorbing the impacts.

Preferably, the upper member is of uniform thickness. The ratio of the thickness of the ABS to the acrylic may be 9:1. In a preferred arrangement, the upper member is 2mm thick with a skin of acrylic 0.2mm thick and a sub-layer of ABS 1.8mm thick. The upper member may be coated in a primer to aid adhesion to the filler material of the inner core.

Preferably, the inner core is made of composite filler formed from curing a resin-stone mix, preferably of limestone, calcium carbonate, dicyclopentadiene (DCPD) resin and a catalyst. The inner core may be of varying thickness throughout its extent. The inner core may have regions of a minimum thickness, for example of 5mm, and regions of greater thickness than the minimum thickness. In this way, the inner core can be formed to provide adequate strength and rigidity for the shower tray but with less material thereby reducing the weight of the tray compared to existing shower trays.

Preferably, the lower member is made of ABS. The lower member may be of uniform thickness. The lower member may have a shape that conforms to the desired variations in thickness of the inner core. In this way, filler forming the inner core can be moulded to the required shape in situ between the upper member and lower member.

Preferably, sockets are provided in the underside of the tray for receiving legs for raising the shower tray above the surface on which it is installed. In this way, one tray can be provided with legs for optional use when installing the tray according to whether the tray is to be mounted directly on the floor or raised from the floor.

The legs may be an interference push-fit into the sockets. The sections of the legs located within the sockets may have longitudinally outwardly extending ribs that bite into the wall of the socket when the legs are inserted and assist in centering the legs.

According to a second aspect of the invention there is provided a method of manufacturing a composite article as defined in claim 14.

The method may comprise pre-forming the upper member and lower members and locating the upper member and lower member relative to each other to define a cavity corresponding substantially to the required shape of the inner core. The upper and lower members may be formed by vacuum moulding.

The upper and lower members may be provided with means to aid locating the members relative to one another to define the cavity. The locating means may comprise co-operating formations on the upper and lower members, preferably cup shaped regions on each member and/or peripheral edges of the members which are a close fit with each other when the upper and lower members are fitted together. The cup regions may be removed after forming the inner core, for example by cutting with a band saw, to provide a waste hole for the tray.

Preferably, the filler is compressed between the upper and lower members prior to hardening to displace the filler throughout the cavity defined between the upper and lower members. The upper and lower members may be held between two formers and pressure applied to the formers to displace the filler throughout the cavity.

The air release holes in the lower member are preferably large enough to allow air out but small enough to prevent the filler from seeping out. The holes may be formed by cutting off pips provided on the lower member. The holes may be 1mm in diameter.

The lower member may be provided with means to assist distribution of the filler material throughout the cavity. For example the lower member may be provided with an array of interlinked recessed regions that allow the filler material to flow freely within the cavity.

An embodiment of the invention will now be described, by example only, with reference to the following drawings, in which:-
**Figure 1** is a perspective view of a shower tray according to the invention from above;
**Figure 2** is a perspective view of the shower tray shown in Figure 1 from below;
**Figure 3** is an exploded schematic of the different members of the shower tray;
**Figure 4** is a cross-section of a portion of the upper member of the tray;
**Figure 5** is a cut-away perspective view of an orifice for receiving a riser leg;
**Figure 6** is a cut-away perspective view of the orifice with the riser leg received therein;
**Figure 7** is a schematic cross-sectional view of the tray during a stage of manufacture;
**Figure 8** is a schematic cross-sectional view of the tray during another stage of manufacture;
**Figure 9** is a schematic cross-sectional view of the tray during a further stage of manufacture;
**Figure 10** is a schematic cross-sectional view of the tray during yet another stage of manufacture;
**Figure 11** is a cross-section of a peripheral portion of the tray - prior to trimming around the perimeter;
**Figure 12** is a cross-section of a portion of the tray for receiving a waste pipe before the hole for the waste pipe has been formed; and
**Figure 13** is a perspective view of a carrier for the former nest brace for supporting the upper and lower members during manufacture of the shower tray.

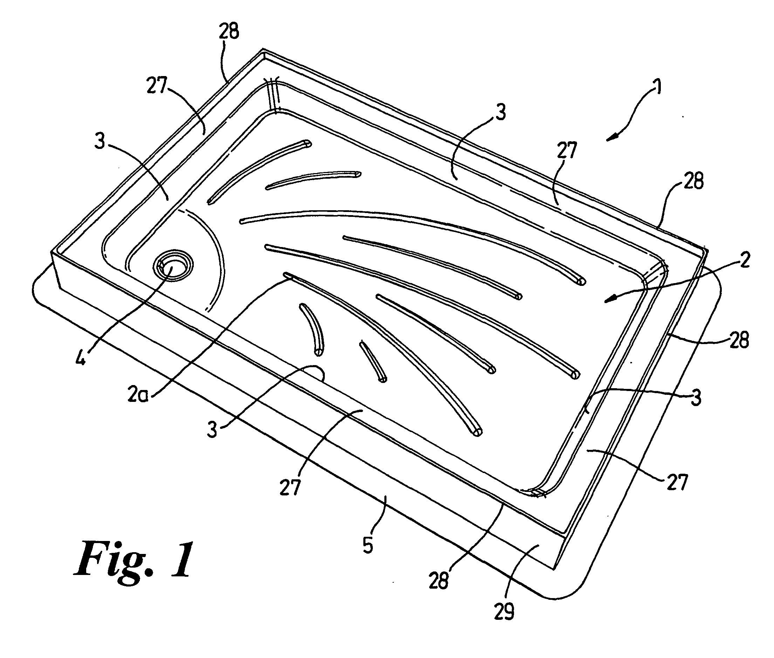

Referring to Figures 1 to 6 of the accompanying drawings, a shower tray 1 is shown comprising a floor 2 and inner walls 3 defining a well for collecting water dispensed from the shower head and confining the collected water to the shower tray. The floor 2 is provided with raised ribs 2a that provide an anti-slip surface. Any arrangement of ribs 2a and/or other pattern may be employed. A hole 4 is provided in a corner of the floor 2 for a waste pipe (not shown). The floor 2 has a 1 ° slope towards the waste hole 4 so that the water in the shower tray will self-drain towards the hole 4.

The inner walls 3 lead to an outwardly extending upper wall 27 at the top of the tray that leads to an upstand 28 at the outer peripheral edge of the tray. The upstand 28 assists in providing a watertight seal with panels of a shower enclosure and/or tiling when the shower tray 1 is installed. The upstand 28 leads to an outer side wall 29 that terminates in an outwardly directed skirt 5 at the bottom of the tray which is to be trimmed, as explained later herein, to produce the finished shower tray.

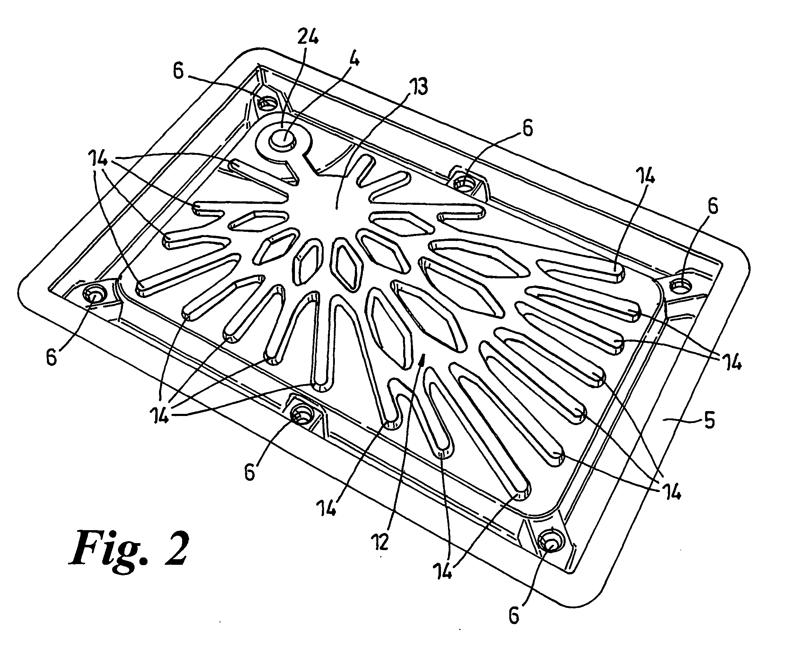

The shower tray is provided on the underside with sockets 6 (shown in Figures 2, 5 and 6) for receiving riser legs 23 for installing the tray raised off the floor. In this embodiment, six sockets are provided, one at each corner and one centrally along each longer side of the tray. It will be understood, however, that the number and arrangement of sockets may be altered according to the size and shape of the tray.

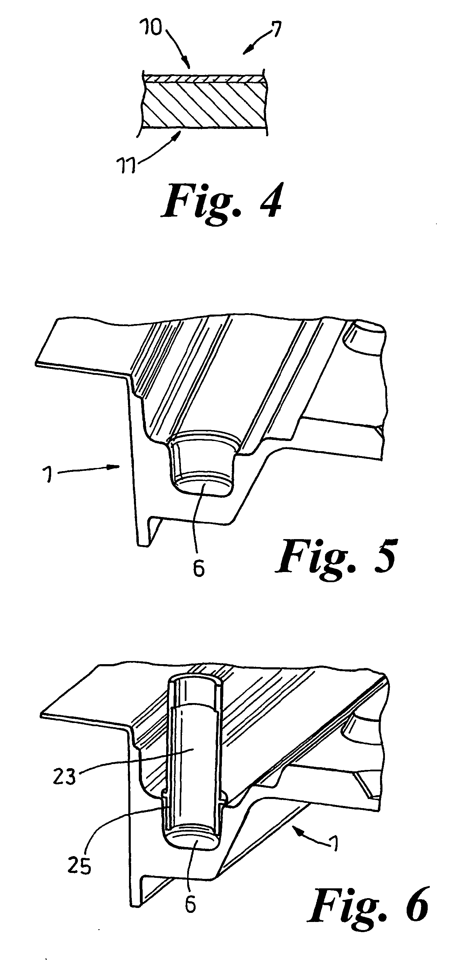

As clearly shown in Figure 6, each leg 23 has a flange 25 for limiting the extent of travel of the leg 23 into the socket 6. The circumferential section of leg 23 received within the socket 6 has longitudinally outwardly extending ribs that provide an interference fit during insertion of the leg 23 in the socket 6. These ribs assist in centralising the leg 23 so that it fits vertically in the socket 6 to ensure the tray is mounted horizontally during installation.

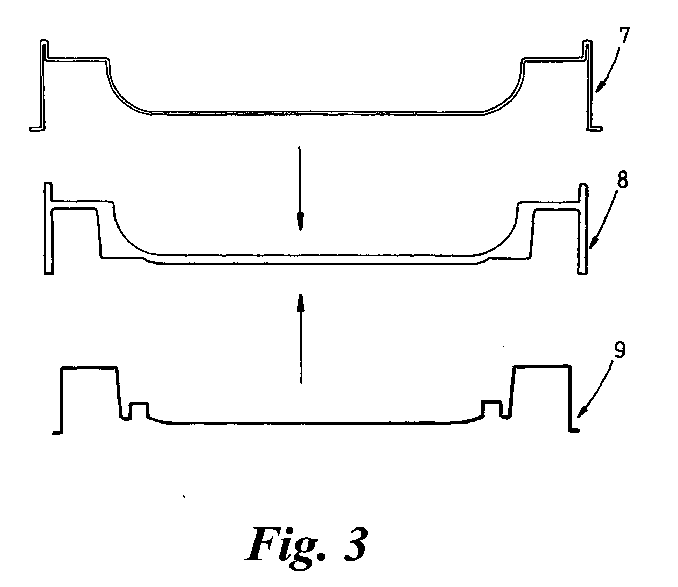

As can be clearly seen in Figure 3, the tray 1 comprises an inner core 8 sandwiched between an upper member 7 and a lower member 9 which form a shell encasing the inner core 8.

The upper member 7 is pre-formed to the required shape of the floor 2, inner side walls 3, upper wall 27, upstand 28, and outer side walls 29, for example by vacuum moulding, from an acrylic capped ABS sheet 2mm thick (a cross-section of which is shown in detail in Figure 4). The acrylic layer 10 forms the upper surface of the tray. The acrylic layer 10 is 0.2mm thick and the ABS layer 11 is 1.8mm thick. Forming the upper surface of acrylic provides a hard wearing surface that is resistant to scratching while the softer ABS layer 11 below the acrylic layer 10 absorbs impacts which occur during use.

The lower member 9 is also pre-formed, for example by vacuum moulding, from an ABS sheet 1.5mm thick to the required shape for co-operating with the upper member 7 as described later. The lower member 9 includes recessed regions forming patterned webbing 12 comprising a circular section 13, an annular region 24 around the waste hole 4 and a number of interlocking fingers 14 extending to corners of the tray.

The inner core 8 is made of polymer composite filler and provides strength and rigidity to the tray. In this embodiment, the polymer composite filler is formed from curing a resin-stone mix of limestone, calcium carbonate, DCPD resin and catalyst. It will be understood that other compositions may be employed.

The inner core 8 has regions of different thickness, with a minimum thickness of 5mm, defined by the spacing of the upper member 7 and lower member 9. In particular, the webbing 12 on the lower member 9 provides sections of the tray in which the inner core 8 is of a thickness greater than the minimum thickness of 5mm. These thicker sections provide extra rigidity and strength for the tray. In particular, the tray does not flex when stood on by a person and extra strength and rigidity is provided around the waste hole 4. The extra support provided by the extra thickness of the composite filler web ensures that the tray sits horizontally to the floor. Furthermore, the webbed design reduces the amount of composite filler required by approximately 1/6 thereby reducing the weight of the tray and resulting in a cost saving in material.

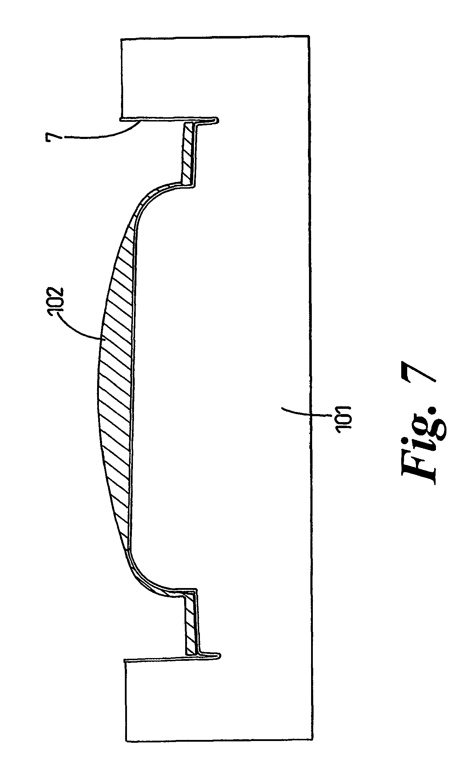

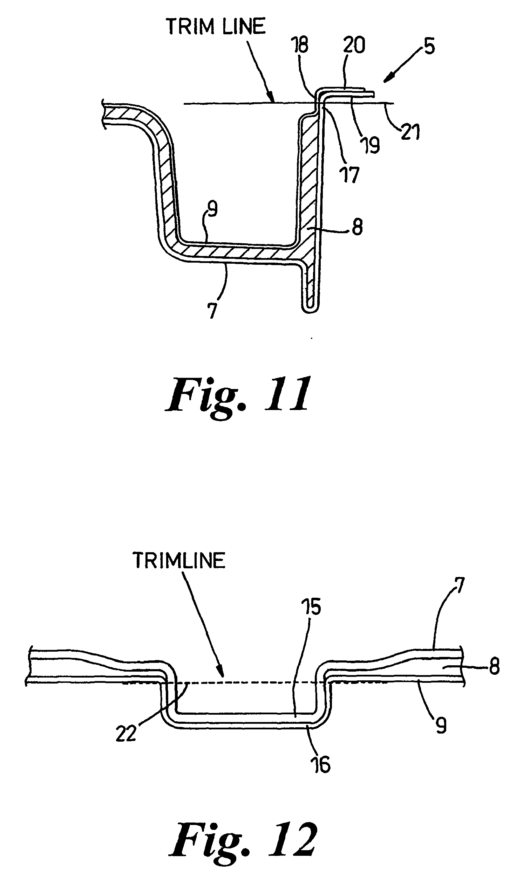

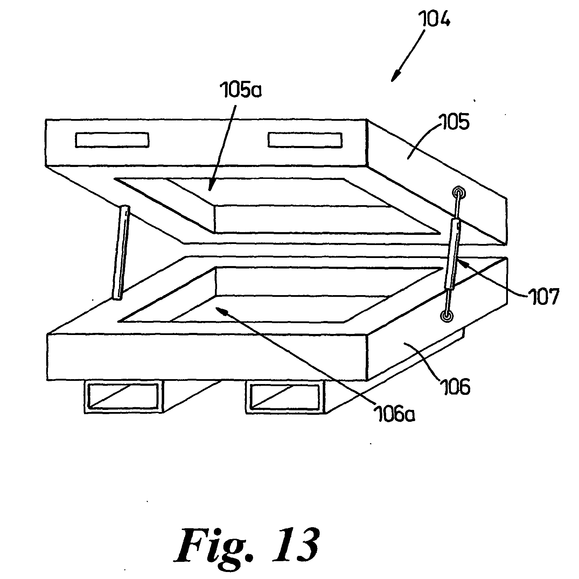

Manufacture of the shower tray will now be described with additional reference to Figures 7 to 13. Figures 7 to 10 show the different stages of manufacture of the tray, Figures 11 and 12 show trimming stages during finishing of the tray, and Figure 13 shows apparatus for use in the manufacture of the tray.

Firstly, the acrylic capped ABS upper member 7 and the ABS lower member 9 are pre-formed into the required shape by vacuum moulding.

The upper and lower members 7 and 9 are then coated in a primer resin and may be heated to cure the primer resin. The primer ensures good adhesion between the members 7 and 9 and the composite filler of the inner core 8.

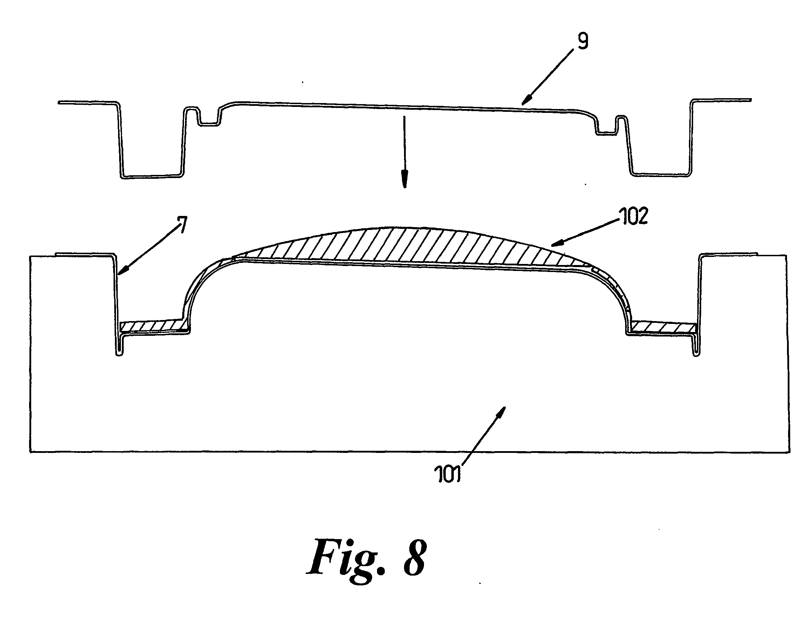

The upper member 7 is supported upside down in a lower former or nest 101 as shown in Figure 7 and a stone-resin mix 102 is then poured into the upper member 7 at a point near to where the waste hole 4 will be formed to coincide with the circular section 13 on the lower member 9. The lower member 9 is then fitted into the upper member 7 to sandwich the stone-resin mix 102 between the two members 7 and 9 as shown in Figure 8.

At this stage of manufacture, the region of the members 7 and 9 which are to form the waste hole 4 consist of cup shaped regions 15 and 16 respectively as shown in Figure 12. The cup shaped regions 15 and 16 are a close fit with each other to aid location of the lower member 9 relative to the upper member 7 when the lower member 9 is fitted into the upper member 7. The depth and fit of the cups 15 and 16 are such that it is impossible for any stone resin mix 102 to remain in the space between the cups 15 and 16 when the members 7and 9 are brought together. Correct fitting of the members 7 and 9 together is further aided by the close fit of peripheral edges 17 and 18 of the members 7 and 9 (see Figure 11). The close fit of the peripheral edges 17 and 18 prevents stone-resin mix 102 escaping from these regions.

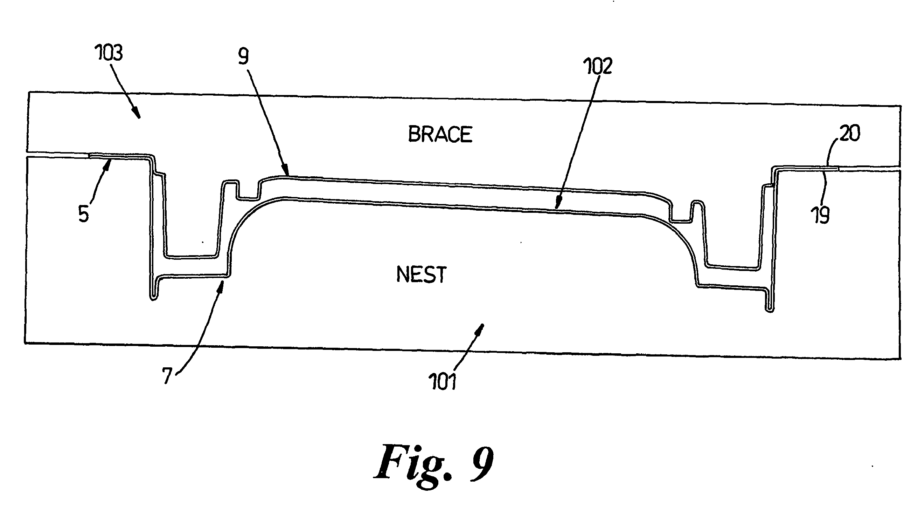

As shown in Figure 9, a top former or brace 103 is lowered onto the member 9 and pressure is applied to force the stone-resin mix 102 to flow to all accessible regions of the cavity between the members 7 and 9. The webbing 12 on the member 9 ensures that the stone-resin mix 102 flows quickly to all four corners of the tray. Flanges 19 and 20 around the peripheral edges of the members 7 and 9 are clamped between the nest 101 and brace 103 to form the skirt 5. The shape of the nest 101 and brace 103 is complementary to the shape of the upper member 7 and lower member 9 respectively. In this way, the members 7, 9 are supported to maintain the required shape and alignment of the members 7, 9.

A hinged carrier 104 for the nest 101 and brace 103 is shown schematically in Figure 13. The carrier 104 comprises upper and lower supports 105, 106 with opposed cavities 105a, 106a for receiving the brace 103 and nest 101 respectively. The members 105, 106 are mounted for relative pivotal movement to raise/lower the upper member 105 relative to the lower member 106 under the control of gas struts 107 to position the brace 103 and nest 101 relative to each other during the manufacturing process. The carrier 104 comprises three 40mm diameter pneumatic cylinders for generating around 80kg of down force on the member 9 to displace the stone-resin mix 102 throughout the cavity formed between the members 7, 9. Housing the nest 101 and brace 103 in the carrier 104 eliminates heavy manual lifting of the nest 101 and brace 103.

To allow air trapped between the members 7 and 9 to escape from the mould, small pips (not shown) are formed in the member 9 during vacuum moulding at regular intervals, approximately 20mm, along each finger as well as on the outer edge of the tray. The pips are cut off from the member 9 before fitting the member 9 into the member 7 in the nest 101. On closure of the brace 103, air is forced to the edges of the tray and out through holes created by cutting off the pips. The holes are large enough to let air escape but small enough to prevent the stone-resin mix 102 escaping. In this embodiment, the holes created by cutting off the pips are 1mm in diameter and the beads within the stone-resin mix 102 are approximately 2mm in diameter.

Pressure is applied to the member 9 for approximately 10 minutes after pouring and then the applied pressure is reduced allowing the brace 103 to back off 5mm. This ensures contraction of the tray during curing the stone-resin mix 102 does not damage the nest 101 and brace 103. In this position, the nest 101 and brace 103 still limit and control any distortion of the tray. It will be understood that the back off distance of 5mm can be altered to achieve the best results.

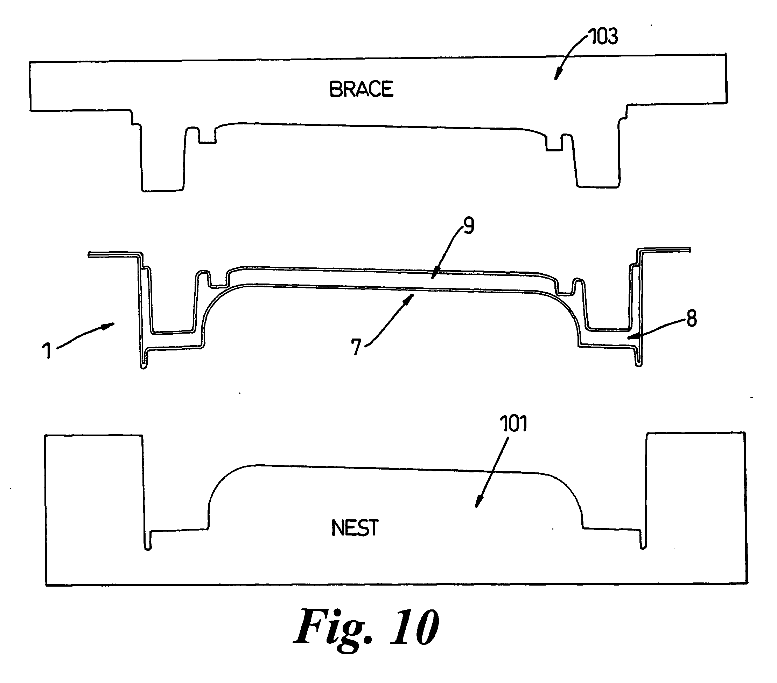

The brace 103 may then be lowered again to apply pressure to the tray for a final cure of the stone-resin mix 102 to form the inner core 8 of composite filler. After the final cure, the brace 103 is raised and the tray is removed from the nest 101 as shown in Figure 10.

The skirt 5 and cup regions 15 and 16 are then cut-off with a band saw or by other means at the positions indicated by dotted lines 21 and 22 in Figures 11 and 12 to provide a flat surface around the perimeter on the underside of the shower tray for mounting the tray and the waste hole 4 for connection to a waste pipe.

The process is a closed mould process and therefore styrene emissions are trapped within the tray. Accordingly, there is no requirement for means to extract the styrene emissions during manufacture, resulting in a reduction in costs.

Providing a member 9 of ABS to cover the filler 8 on the underside of the tray 1 allows the tray to be easily removed from the nest 101 and brace 103 eliminating the need for a release agent. Furthermore, there is no longer any need to grind the base of the tray flat. Accordingly, there is no need to remove airborne dust created by the grinding process.

As will now be appreciated the present invention provides a tray in which the composite filler of the inner core 8 is concealed from view by the upper and lower members 7, 9 providing a clean, smooth appearance that may appeal to the consumer. Furthermore, a smooth, flat finish can be achieved when moulding the ABS material that makes it easy to form a seal between the waste pipe and the tray. If the tray is dropped or knocked heavily against another object the ABS of members 7, 9 will absorb some of the impact and can reduce damage caused to the tray.

It will be understood that the invention is not limited to the embodiment described above and modifications and alterations within the scope of the invention as defined in the claims will be apparent to those skilled in the art.

For example, the upper member, lower member and inner core may be made of any suitable materials for the intended use of the composite article.

## Claims

1. A composite article comprising a shower tray (1) having a top side with a well and an underside spaced from the top side, the shower tray (1) comprising an upper member (7) of plastics material and a lower member (9) of plastics material that together form an outer shell having the upper member (7) on the top side and the lower member (9) on the underside of the shower tray (1), and an inner core (8) of filler extending throughout the shell between the top side and the underside to provide strength and rigidity, wherein the upper and lower members (7;9) are formed from plastics sheet material **characterised in that** holes are provided in the lower member (9) for releasing air from between the upper member (7) and the lower member (9).

2. A composite article according to claim 1 wherein the upper member (7) has an outer layer (10) of hardwearing, scratch resistant material and optionally a layer (11) of softer material underneath the outer layer (10) for absorbing impacts occurring during use of the article.

3. A composite article according to any preceding claim wherein the upper member (7) is an acrylic capped ABS material and the lower member (9) is made of ABS.

4. A composite article according to any preceding claim wherein the filler is a resin-stone mix.

5. A composite article according to claim 4 wherein the resin-stone mix comprises a mixture of limestone, calcium carbonate, dicyclopentadiene (DCPD) resin and a catalyst.

6. A composite article according to any preceding claim wherein the upper member (7) and lower member (9) are of uniform thickness.

7. A composite article according to any preceding claims wherein the lower member (9) has a shape that conforms to desired variations in thickness of the inner core (8).

8. A composite article according to any preceding claim wherein sockets (6) are provided in the underside of the lower member (9) for receiving legs (23) for raising the article above a surface on which it is installed.

9. A composite article according to any preceding claim wherein the upper and lower members (7;9) are provided with means, for example co-operating formations, to aid locating the members (7;9) relative to one another during moulding of the core (8).

10. A composite article according to claim 9 wherein the co-operating formations include cup regions (15,16) for providing a waste hole (4).

11. A composite article according to claim 9 wherein the co-operating formations include peripheral edge regions (17,19;18,20) of the upper and lower members (7; 9).

12. A composite article according to any preceding claim wherein the lower member (9) is provided with means, for example an array of interlinked recessed regions (12), to allow the filler material to flow freely between the members (7;9) to assist distribution of the filler material between the members (7; 9) during moulding of the core (8).

13. A composite article according to any preceding claim wherein the shower tray (1) further comprises an outer wall (29) depending from the topside at an outer peripheral edge of the shower tray, and the inner core (8) extends between opposing surfaces of the upper member (7) and the lower member (9) in the region of the outer wall (29).

14. A method of manufacturing a composite article comprising a shower tray (1) having a top side with a well and an underside spaced from the top side as defined in claim 1, the method comprising the steps of providing an upper member (7) of plastics sheet material and a lower member (9) of plastics sheet material which together form an outer shell having the upper member (7) on the top side and the lower member (9) on the underside of the shower tray (1), and providing an inner core (8) of filler material extending throughout the shell between the topside and the underside such that the inner core (8) is encased by the outer shell to provide strength and rigidity **characterised by** the step of providing the lower member (9) with holes for air to escape from between the lower member (9) and the upper member (7) during formation of the inner core (8) with the shell inverted so that the underside is uppermost.

15. A method according to claim 14 further comprising the step of pre-forming the upper member (7) and lower member (9), for example by vacuum moulding, and locating the upper member (7) and lower member (9) relative to each other to define a cavity corresponding substantially to the required shape of the inner core (8).

16. A method according to claim 14 or claim 15 wherein the step of locating the upper member (7) and lower member (9) relative to one another is provided by co-operating formations on the upper and lower members (7;9) that are a close fit with each other when the upper and lower members (7;9) are fitted together.

17. A method according to claim 16 wherein the co-operating formations comprise cup shaped regions (15;16) on each member (7;9) and further comprising the step of removing the overlapping cup regions after forming the inner core (8) to provide a hole (4) in the article.

18. A method according to claim 16 wherein the co-operating formations comprise peripheral edge regions (17,19;18,20) on each member (7;9) and further comprising the step of removing the overlapping peripheral edge regions (17,19; 18,20) after forming the inner core (8) to provide the article with a base.

19. A method according to any of claims 14 to 18 comprising the step of inverting the upper member (7) so that an inner surface of the upper member (7) is uppermost, pouring filler material onto the inner surface of the inverted upper member (7), inverting the lower member (9) so that an inner surface of the lower member (9) is lowermost, bringing the members (7;9) together with the underside of the shower tray (10 uppermost to distribute and confine the filler material between the upper and lower members (7;9), and hardening the filler material to form the inner core (8).

20. A method according to claim 19 further including the step of compressing the filler between the upper and lower members (7;9) and releasing air trapped between the members (7;9) during formation of the inner core (8) by means of the holes in the lower member (9).

## Patentansprüche

1. Zusammengesetzter Gegenstand, umfassend eine Duschwanne (1) mit einer Oberseite mit einer Vertiefung und einer im Abstand von der Oberseite befindlichen Unterseite, wobei die Duschwanne (1) einen oberen Bauteil (7) aus Kunststoffmaterial und einen unteren Bauteil (9) aus Kunststoffmaterial umfasst, welche zusammen eine Außenschale bilden, wobei der obere Bauteil (7) auf der Oberseite und der untere Bauteil (9) auf der Unterseite der Duschwanne (1) liegen, sowie einen inneren Kern (8) aus Füllmaterial, welcher sich durch die gesamte Schale zwischen der Oberseite und der Unterseite erstreckt, um Festigkeit und Steifigkeit zu erzeugen, wobei die oberen und unteren Bauteile (7; 9) aus Kunststoffbahnmaterial hergestellt sind, **dadurch gekennzeichnet, dass** Löcher in dem unteren Bauteil (9) vorgesehen sind, um Luft zwischen dem oberen Bauteil (7) und dem unteren Bauteil (9) herauszulassen.

2. Zusammengesetzter Gegenstand nach Anspruch 1, wobei der obere Bauteil (7) eine äußere Schicht (9) aus verschleißfestem, kratzfestem Material und gegebenenfalls eine Schicht (11) aus weicherem Material unterhalb der äußeren Schicht (10) aufweist, um Schläge zu absorbieren, die während der Benutzung des Gegenstandes auftreten.

3. Zusammengesetzter Gegenstand nach einem der vorstehenden Ansprüche, wobei der obere Bauteil (9) ein akrylisch abgedecktes ABS-Material ist und der untere Bauteil (9) aus ABS hergestellt ist.

4. Zusammengesetzter Gegenstand nach einem der vorstehenden Ansprüche, wobei das Füllmaterial eine Harz-Steinmischung ist.

5. Zusammengesetzter Gegenstand nach Anspruch 4, wobei die Harz-Steinmischung eine Mischung aus Kalkstein, Kalziumkarbonat, Dicyclopentadien-(DCPD)-Harz und einen Katalysator umfasst.

6. Zusammengesetzter Gegenstand nach einem der vorstehenden Ansprüche, wobei der obere Bauteil (7) und der untere Bauteil (9) eine gleichmäßige Dicke aufweisen.

7. Zusammengesetzter Gegenstand nach einem der vorstehenden Ansprüche, wobei der untere Bauteil eine Form aufweist, die den gewünschten Variationen in der Dicke des inneren Kerns (8) entspricht und folgt.

8. Zusammengesetzter Gegenstand nach einem der vorstehenden Ansprüche, wobei Sockelansätze (6) in der Unterseite des unteren Bauteils (9) vorgesehen sind, um Füße (23) aufzunehmen, um den Gegenstand über eine Oberfläche anzuheben, auf welcher er eingebaut ist.

9. Zusammengesetzter Gegenstand nach einem der vorstehenden Ansprüche, wobei die oberen und unteren Bauteile (7; 9) mit Mitteln, beispielsweise zusammenarbeitenden Formationen, versehen sind, um das Anordnen der Bauteile (7; 9) relativ zueinander während des Formens des Kerns (8) zu unterstützen.

10. Zusammengesetzter Gegenstand nach Anspruch 9, wobei die zusammenarbeitenden Formationen Becherbereiche (15, 16) einschließen, um ein Abflussloch (4) zu erzeugen.

11. Zusammengesetzter Gegenstand nach Anspruch 9, wobei die zusammenarbeitenden Formationen Umfangskantenbereiche (17, 19; 18, 20) der oberen und unteren Bauteile (7; 9) einschließen.

12. Zusammengesetzter Gegenstand nach einem der vorstehenden Ansprüche, wobei der untere Bauteil (9) mit Mitteln, beispielsweise einer Reihe von verbundenen rückspringenden Bereichen (12) versehen ist, um es zu ermöglichen, dass das Füllmaterial frei zwischen den Bauteilen (7; 9) fließen kann, um die Verteilung des Füllmaterials zwischen den Bauteilen (7; 9) während des Formens des Kerns (8) zu unterstützen.

13. Zusammengesetzter Gegenstand nach einem der vorstehenden Ansprüche, wobei die Duschwanne (1) ferner eine Außenwandung (29) umfasst, die nach unten von der Oberseite an einer äußeren Umfangskante der Duschwanne vorsteht und wobei der innere Kern (8) sich zwischen einander gegenüberliegenden Oberflächen des oberen Bauteils (7) und des unteren Bauteils (9) im Bereich der Außenwand (29) erstreckt.

14. Verfahren zur Herstellung eines zusammengesetzten Gegenstandes, umfassend eine Duschwanne (1) mit einer Oberseite mit einer Vertiefung und einer Unterseite im Abstand von der Oberseite gemäß Anspruch 1, wobei das Verfahren die folgenden Schritte umfasst: Bereitstellen eines oberen Bauteils (7) aus Kunststoffbahnmaterial und eines unteren Bauteils (9) aus Kunststoffbahnmaterial, welche zusammen eine Außenschale bilden, die den oberen Bauteil (7) auf der Oberseite und den unteren Bauteil (9) auf der Unterseite der Duschwanne (1) aufweist und Bereitstellen eines inneren Kerns (8) aus Füllmaterial, welcher sich durch die Schale zwischen der Oberseite und Unterseite erstreckt, so dass der innere Kern (8) durch die Außenschale eingeschlossen ist, um Festigkeit und Starrheit zu erzeugen, **gekennzeichnet durch** den Schritt der Bereitstellung des unteren Bauteils (9) mit Löchern, damit Luft zwischen dem unteren Bauteil (9) und dem oberen Bauteil (7) während der Bildung des inneren Kerns (8) entweichen kann, wobei die Schale auf den Kopf gestellt angeordnet wird, so dass die Unterseite zu oberst liegt.

15. Verfahren nach Anspruch 14, ferner umfassend den Schritt des Vorformens des oberen Bauteils (7) und des unteren Bauteils (9), beispielsweise durch Vakuumverformung, und Anordnen des oberen Bauteils (7) und des unteren Bauteils (9) relativ zueinander, um einen Hohlraum zu bilden, welcher im wesentlichen der erforderlichen Form des inneren Kerns (8) entspricht.

16. Verfahren nach Anspruch 14 oder Anspruch 15, wobei der Schritt des Anordnens des oberen Bauteils (7) und des unteren Bauteils (9) relativ zueinander durch zusammenarbeitende Formationen an dem oberen und unteren Bauteil (7; 9) erfolgt, welche miteinander in dichter Passung stehen, wenn der obere und der untere Bauteil (9) zusammengefügt werden.

17. Verfahren nach Anspruch 16, wobei die zusammenarbeitenden Formationen becherförmige Bereiche (15; 16) an beiden Bauteilen (7; 9) und ferner den Schritt umfassen, dass die überlappenden becherförmigen Bereiche nach dem Formen des inneren Kerns (8) entfernt werden, um ein Loch (4) in dem Gegenstand zu erzeugen.

18. Verfahren nach Anspruch 16, wobei die zusammenarbeitenden Formationen Umfangskantenbereiche (17, 19; 18, 20) an beiden Bauteilen (7; 9) umfassen und ferner den Schritt umfassen, die überlappenden Umfangskantenbereiche (18, 19; 18, 20) nach Formen des inneren Kerns (8) zu entfernen, um den Gegenstand mit einer Basis zu versehen.

19. Verfahren nach einem der Ansprüche 14 bis 18, umfassend den Schritt des Umkehrens des oberen Bauteils (7), so dass eine Innenoberfläche des oberen Bauteils (7) zu oberst liegt, Gießen von Füllmaterial in die innere Oberfläche des umgekehrten oberen Bauteils (7), Umkehren des unteren Bauteils (9), so dass eine Innenfläche des unteren Bauteils (9) zu unterst liegt, Zusammenbringen der Bauteile (7; 9) mit der Unterseite der Duschwanne (10) zu oberst, um das Füllmaterial zwischen den oberen und unteren Bauteilen (7; 9) zu verteilen und einzuschließen, und Härten des Füllmaterials zum Bilden des inneren Kerns (8).

20. Verfahren nach Anspruch 19, ferner einschließend den Schritt des Zusammendrückens des Füllmaterials zwischen den oberen und unteren Bauteilen (7; 9) und Freilassen der zwischen den Baueilen (7; 9) während der Bildung des inneren Kerns (8) eingeschlossenen Luft mittels der Löcher in dem unteren Bauteil (9).

## Revendications

1. Article composite comprenant un bac de douche (1) ayant un côté supérieur avec une cavité et un côté inférieur espacé du côté supérieur, le bac de double (1) comprenant un élément supérieur (7) en matériau plastique et un élément inférieur (9) en plastique qui forment ensemble une coque externe ayant l'élément supérieur (7) sur le côté supérieur et l'élément inférieur (9) sur le côté inférieur du bac de douche (1), et un noyau intérieur (8) de charge s'étendant à travers la coque entre le côté supérieur et le côté inférieur pour donner de la résistance et de la rigidité, où les éléments supérieur et inférieur (7; 9) sont réalisés à partir d'un matériau de feuille plastique, **caractérisé en ce que** des trous sont ménagés dans l'élément inférieur (9) pour la libération de l'air depuis entre l'élément supérieur (7) et l'élément inférieur (9).

2. Article composite selon la revendication 1, où l'élément supérieur (7) présente une couche extérieure (10) en un matériau résistant à l'usure, résistant à des égratignures, et en option une couche (11) d'un matériau plus doux en dessous de la couche extérieure (10) pour absorber des impacts produits pendant l'utilisation de l'article.

3. Article composite selon l'une quelconque des revendications précédentes, où l'élément supérieur (7) est un matériau ABS revêtu d'acrylique et l'élément inférieur (9) est réalisé en ABS.

4. Article composite selon l'une quelconque des revendications précédentes, où la charge est un mélange de résine-pierre.

5. Article composite selon la revendication 4, où le mélange résine-pierre comprend un mélange de calcaire, de carbonate de calcium, de résine dicyclopentadiène (DCPD) et un catalyseur.

6. Article composite selon l'une quelconque des revendications précédentes, où l'élément supérieur (7) et l'élément inférieur (9) ont une épaisseur uniforme.

7. Article composite selon l'une quelconque des revendications précédentes, où l'élément inférieur (9) a une forme qui s'adapte à des variations souhaitées dans l'épaisseur du noyau interne (8).

8. Article composite selon l'une quelconque des revendications précédentes, où des douilles (6) sont prévues dans le côté inférieur de l'élément inférieur (9) pour recevoir des branches (23) pour relever l'article au-dessus d'une surface sur laquelle il est installé.

9. Article composite selon l'une quelconque des revendications précédentes, où les éléments supérieur et inférieur (7; 9) présentent des moyens, par exemple des formations coopérantes, pour contribuer à la localisation des éléments (7; 9) l'un relativement à l'autre pendant le moulage du noyau (8).

10. Article composite selon la revendication 9, où les formations coopérantes comprennent des régions de coupelle (15, 16) afin de réaliser une bonde de vidage (4).

11. Article composite selon la revendication 9, où les formations coopérantes comprennent des régions de bord périphériques (17, 19; 18, 20) des éléments supérieur et inférieur (7; 9).

12. Article composite selon l'une quelconque des revendications précédentes, où l'élément inférieur (9) présente des moyens, par exemple une rangée de régions évidées (12) reliées entre elles, pour permettre au matériau de charge de s'écouler librement entre les éléments (7; 9) pour contribuer à la distribution du matériau de charge entre les éléments (7; 9) pendant le moulage du noyau (8).

13. Article composite selon l'une quelconque des revendications précédentes, où le bac de douche (1) comprend en outre une paroi extérieure (29) s'étendant vers le bas depuis le côté supérieur à un bord périphérique extérieur du bac de douche, et le noyau interne (8) s'étend entre les surfaces opposées de l'élément supérieur (7) et de l'élément inférieur (9) dans la région de la paroi extérieure (29).

14. Procédé de fabrication d'un article composite comprenant un bac de douche (1) ayant un côté supérieur avec une cavité et un côté inférieur espacé du côté supérieur tel que défini dans la revendication 1, le procédé comprenant les étapes consistant à réaliser un élément supérieur (7) en matériau de feuille plastique et un élément inférieur (9) en matériau de feuille plastique qui forment ensemble une coque externe ayant l'élément supérieur (7) sur le côté supérieur et l'élément inférieur (9) sur le côté inférieur du bac de douche (1) et réaliser un noyau interne (8) en matériau de charge s'étendant à travers la coque entre le côté supérieur et le côté inférieur de sorte que le noyau interne (8) est renfermé par la coque externe pour fournir de la résistance et de la rigidité, **caractérisé par** l'étape consistant à réaliser l'élément inférieur (9) avec des trous pour l'échappement de l'air depuis entre l'élément inférieur (9) et l'élément supérieur (7) pendant la formation du noyau interne (8), la coque étant inversée de sorte que son côté inférieur se trouve en haut.

15. Procédé selon la revendication 14, comprenant en outre l'étape consistant à préformer l'élément supérieur (7) et l'élément inférieur (9), par exemple par moulage sous vide, et localiser l'élément supérieur (7) et l'élément inférieur (9) l'un relativement à l'autre pour définir une cavité correspondant sensiblement à la forme requise du noyau interne (8).

16. Procédé selon la revendication 14 ou la revendication 15, où l'étape consistant à localiser l'élément supérieur (7) et l'élément inférieur (9) l'un relativement à l'autre est réalisée par des formations coopérantes sur les éléments supérieur et inférieur (7; 9) qui sont à ajustement serré les unes avec les autres lorsque les éléments supérieur et inférieur (7; 9) sont assemblés.

17. Procédé selon la revendication 16, où les formations coopérantes comprennent des régions en forme de coupelle (15, 16) sur chaque élément (7; 9), et comprenant en outre l'étape consistant à retirer les régions de coupelle qui se chevauchent après la formation du noyau interne (8) pour réaliser un trou (4) dans l'article.

18. Procédé selon la revendication 16, où les formations coopérantes comprennent des régions de bord périphériques (17, 19; 18, 20) sur chaque élément (7; 9), et comprenant en outre l'étape consistant à retirer les régions de bord périphériques (17, 19; 18, 20) qui se chevauchent après la formation du noyau interne (8) pour conférer à l'article une base.

19. Procédé selon l'une quelconque des revendications 14 à 18, comprenant l'étape consistant à inverser l'élément supérieur (7) de sorte qu'une surface intérieure de l'élément supérieur (7) se trouve sur le dessus, à verser un matériau de charge sur la surface intérieure de l'élément supérieur inversé (7), inverser l'élément inférieur (9) de sorte qu'une surface intérieure de l'élément inférieur (9) se trouve en bas, amener les éléments (7; 9) ensemble, le côté inférieur du bac de douche (10) se trouvant en haut pour distribuer et confiner le matériau de charge entre les éléments supérieur et inférieur (7; 9), et durcir le matériau de charge pour former le noyau interne (8).

20. Procédé selon la revendication 19, comprenant en outre l'étape consistant à compresser la charge entre les éléments supérieur et inférieur (7; 9) et à libérer l'air renfermé entre les éléments (7; 9) pendant la formation du noyau interne (8) au moyen des trous dans l'élément inférieur (9).
